# EUROPEAN PATENT SPECIFICATION

(11) **EP 0 426 472 B1**
(45) Date of publication and mention of the grant of the patent: **24.01.1996**
(21) Application number: 90311976.6
(22) Date of filing: 01.11.1990
(51) Int. Cl.: G11B 7/085

(54) **Information recording and/or reproducing apparatus for timing switching of a jumping pulse from an intermittently detected tracking signal**
Informationsaufzeichnungs- und/oder -wiedergabegerät zur Zeitvermittlung eines Spursprungimpulses aus einem intermittierenden detektierten Spurfehlersignal
Appareil d'enregistrement et/ou reproduction d'information à commutation temporelle d'une impulsion de saut dérivée de la détection intermittente d'un signal de poursuite de piste

(30) Priority: 02.11.1989 JP 284933/89; 09.01.1990 JP 962/90; 23.10.1990 JP 286394/90
(43) Date of publication of application: 08.05.1991
(73) Proprietor: CANON KABUSHIKI KAISHA, Tokyo (JP)
(72) Inventor: Ogino, Tsukasa, c/o Canon Kabushiki Kaisha, Ohta-ku, Tokyo (JP)
(74) Representative: Beresford, Keith Denis Lewis

(56) References cited:
- EP-A- 0 309 704
- US-A- 4 872 152

## Description

### BACKGROUND OF THE INVENTION

### Field of the Invention

The present invention relates to an apparatus for recording and/or reproducing information on and/or from a recording medium having a plurality of tracks arranged thereon.

### Related Background Art

An optical disk has been known as a recording medium. On the optical disk, a plurality of concentric or spiral tracks are formed. Those tracks are divided into a plurality of sectors in order to record variable length data and enhance an accessing speed. The information is recorded and reproduced sector by sector.

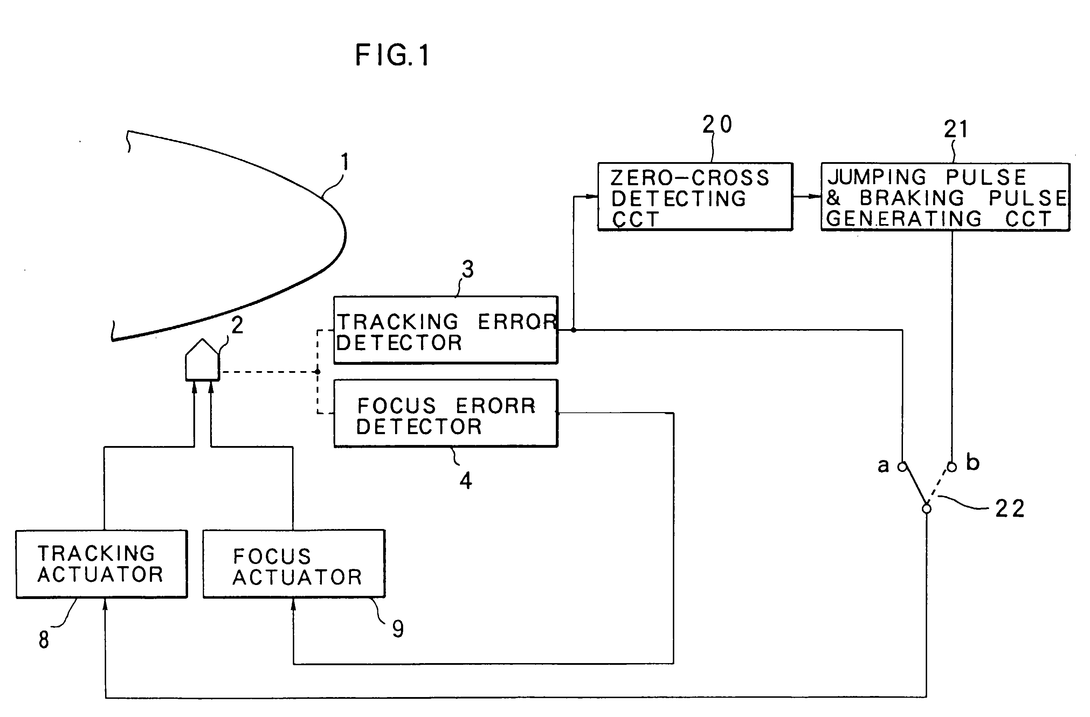

In the prior art, an apparatus shown in Fig. 1 has been used to record and/or reproduce information on and/or from the optical disk. In Fig. 1, numeral 1 denotes an optical disk, and numeral 2 denotes an optical system for recording and/or reproducing information by focusing a light beam emitted from a light source (not shown) onto one of the tracks on the optical disk 1. The light beam reflected by the optical disk 1 is received by a tracking error detector 3 and a focusing error detector 4 so that a tracking error signal and a focusing error signal are detected by a known principle. The detected focusing error signal is supplied to a focus actuator 9 which controls the focusing by moving the optical system 2 along an optical axis thereof in accordance with the input focusing error signal. The tracking error signal detected by the tracking error detector 3 is supplied to a tracking actuator 8 through a switch 22. The tracking actuator controls the tracking by moving the optical system 2 perpendicularly to the optical axis thereof across the track in accordance with the input tracking error signal.

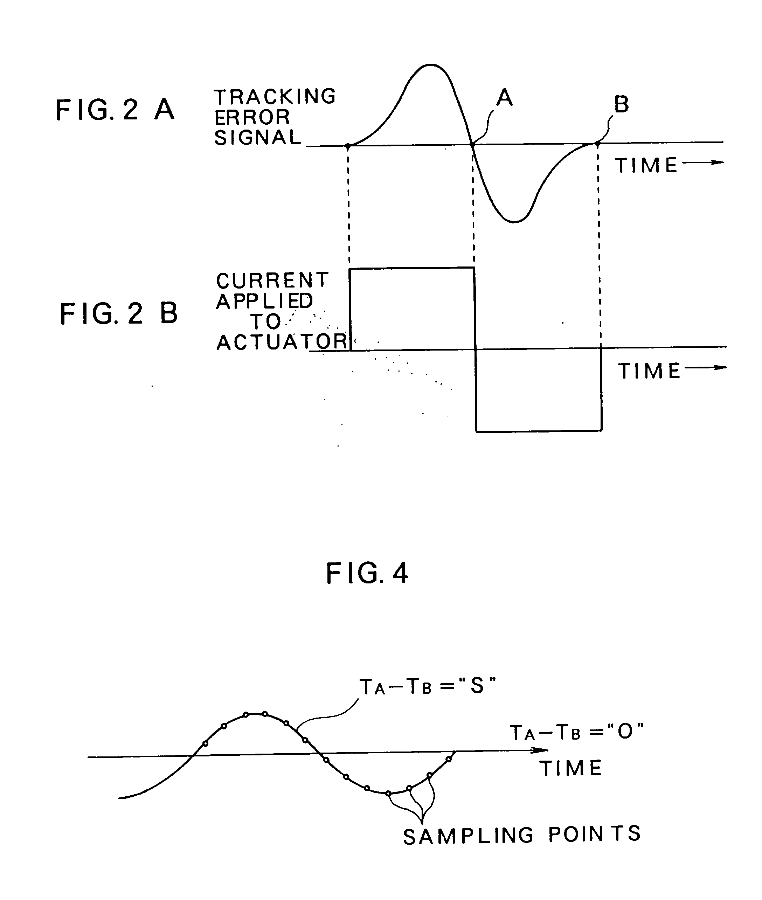

On the other hand, when the light beam is to be directed to a desired track from the currently irradiating track, the switch 22 is switched from a position a to a position b and a pulse signal is applied from a pulse generator to the tracking actuator 8. As shown in Fig. 2B, the pulse signal comprises a positive-going pulse signal (jumping pulse) for accelerating the optical system 2 toward the desired track and a negative-going pulse signal (braking pulse) for decelerating the optical system 2. The switching of the signal from the jumping pulse to the braking pulse is effected in accordance with a timing signal supplied from a zero-crossing detector 20. The zero-crossing detector 20 generates the timing signal based on the tracking error signal produced by the tracking error detector 3. The tracking error signal varies between a positive value and a negative value with a period corresponding to a track pitch as shown in Fig. 2A as the optical system 2 is moved across the track. The zero-crossing detector 20 detects a point A (zero-crossing point) at which the tracking error signal reaches zero and sends the timing signal to the pulse generator 21, which switches the jumping pulse and the braking pulse at the point A in accordance with the timing signal. At a point B at which the light beam reaches the desired track, the output of the braking pulse is stopped and the movement of the light beam or so-called jump operation is terminated.

However, in the apparatus in which the jumping signal is switched at the zero-crossing point of the tracking error signal, a problem occurs where a method for intermittently detecting the tracking error signal, for example, a sample servo system is used. This is explained below.

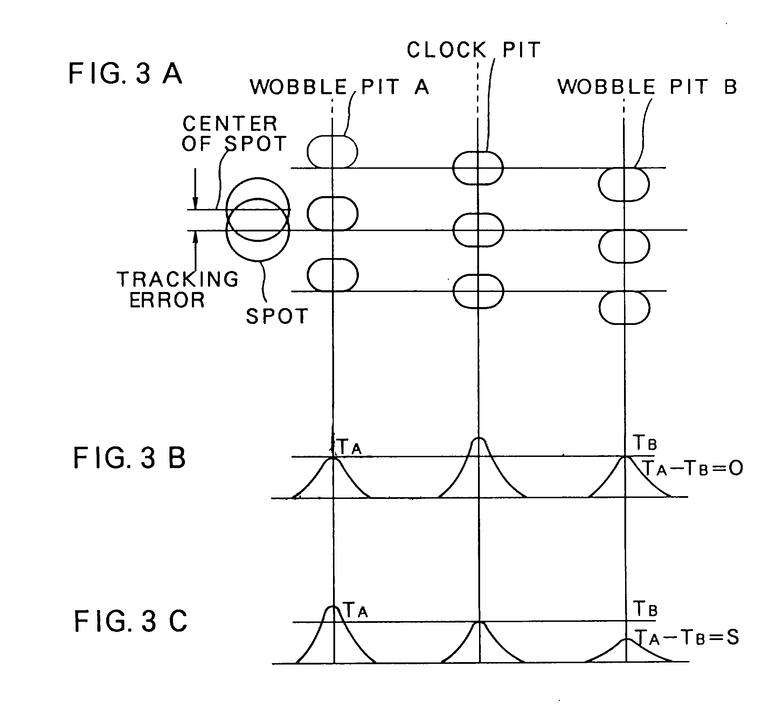

In the sample servo system, a servo area is provided for each sector. As shown in Fig. 3A, wobbled pits and a clock pit are preformed in each servo area. The clock pit is recorded on the track and the wobbled pits are recorded in front of and behind the clock pit and staggered from the track on both sides thereof.

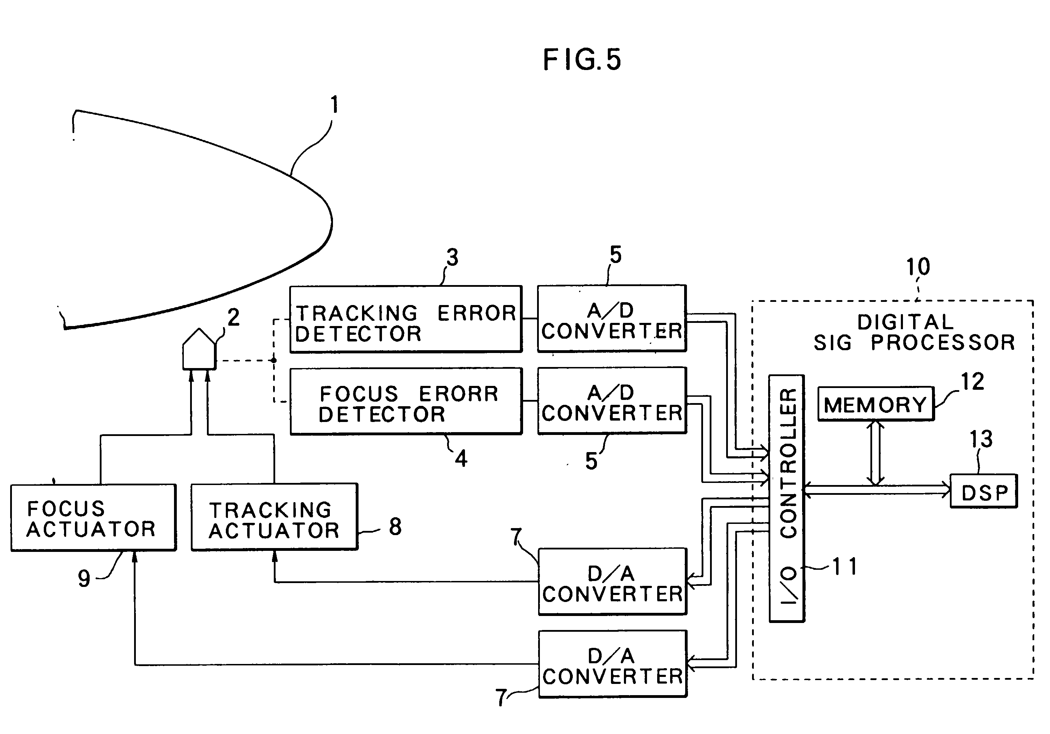

In such a servo area, when the light beam spot is on the track, an output signal as shown in Fig. 3B is produced and the tracking error signal is zero through the processing of T_{A} - T_{B}. As shown in Fig. 3A, where the light spot somewhat deviates from the track toward the wobbled pit A, the AT error signal S is produced through the processing of T_{A} - T_{B} as shown in Fig. 3C. When the light spot moves across the track, the value of T_{A} - T_{B} changes as shown in Fig. 4.

In the manner, in the sample servo system, the AT error signal is produced discretely for each sector because each sector has the servo byte as shown in Fig. 3A. Accordingly, when the light beam moves across the track, the sampling point having zero value is not always obtained. Thus, in the configuration shown in Fig. 1, the timing signal for commanding the switching of the jump pulse may not be produced.

The above problem is encountered in not only the sample servo system but in other system in which the tracking error signal is intermittently detected. For example, in a method of sampling the signal produced by the tracking error detector at a predetermined period and processing the sampled signals by a digital signal processor (DSP) to produce the tracking error signal, the problem described above is encountered because the error signal is intermittent.

### SUMMARY OF THE INVENTION

It is an object of the present invention to provide an information recording and/or reproducing apparatus which assures the positive detection of a switching timing for a jumping signal based on an intermittently detected error signal.

The above object of the present invention is achieved by the features described in the appended claims.

### BRIEF DESCRIPTION OF THE DRAWINGS

Fig. 1 shows a block diagram of a configuration of a prior art information recording and/or reproducing apparatus,
Figs. 2A and 2B show timing charts for a tracking error signal and a jumping signal in the apparatus of Fig. 1,
Figs. 3A to 3C illustrate a principle of the tracking error signal detection in a sample servo system,
Fig. 4 shows a timing chart for a tracking error signal detected in the sample servo system.
Fig. 5 shows a block diagram of one embodiment of an information recording and/or reproducing apparatus of the present invention,
Fig. 6 shows a flow chart for illustrating a jumping operation in the apparatus of Fig. 5,
Figs. 7A and 7B show timing charts for a tracking error signal and a jumping signal in the apparatus of Fig. 5,
Fig. 8 shows a block diagram of another embodiment of the information recording and/or reproducing apparatus of the present invention,
Fig. 9 shows a flow chart for explaining the jumping operation in the apparatus of Fig. 8,
Figs. 10A and 10B show timing charts for a tracking error signal and a jumping signal in the apparatus of Fig. 8, and
Fig. 11 shows a flow chart for explaining the jumping operation in a further embodiment.

### DETAILED DESCRIPTION OF THE PREFERRED EMBODIMENTS

Fig. 5 shows a block diagram of one embodiment of an information recording and/or reproducing apparatus of the present invention. In Fig. 5, the like elements to those shown in Fig. 1 are designated by the like numerals and the explanation thereof is omitted.

In Fig. 5, a digital signal processor 10 is a control circuit for controlling the movement of an optical system 2 based on a servo error information derived from an optical disk 1. A tracking error detector 3 and a focusing error detector 4 sample a tracking error signal and a focusing error signal, respectively, at a predetermined interval, and supply them to the digital signal processor 10 through an analog/digital (A/D) converter 5. The servo error information is supplied to a memory 12 through an input/output (I/O) controller 11 and stored therein sample by sample. A digital signal processor (DSP) 13 processes the servo error information supplied at each sampling and the servo error information at the previous sampling stored in the memory 12 and sends a control signal to the actuators 8 and 9 through a digital/analog (D/A) converter 7 to control the movement of the optical system 2 as well be described later.

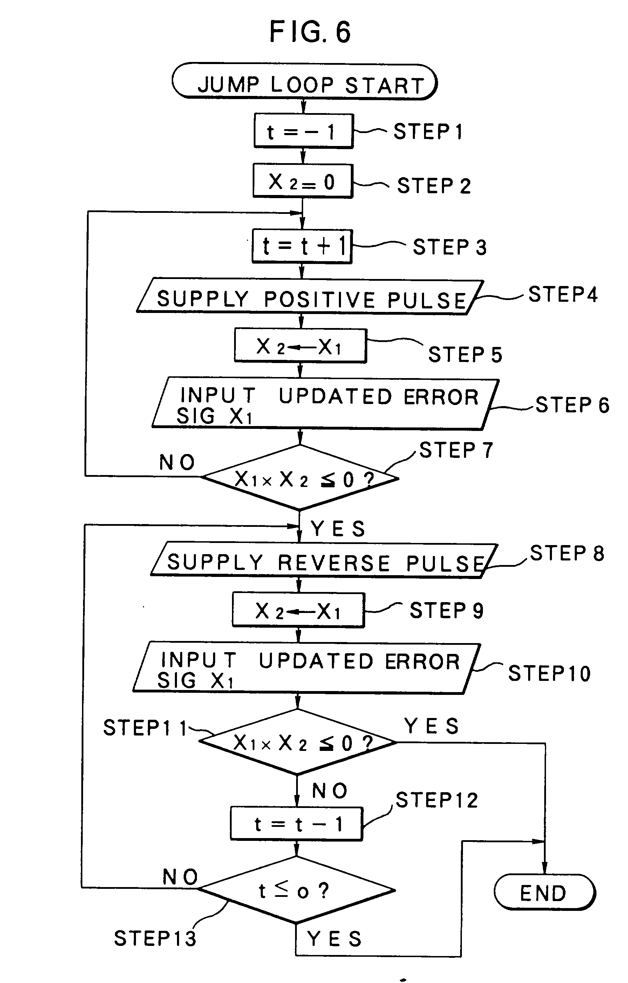

An operation of the present embodiment is now explained with reference to a flow chart shown in Fig. 6, which explains a control operation when the optical system 2 jumps across the track in one direction by the tracking error signal.

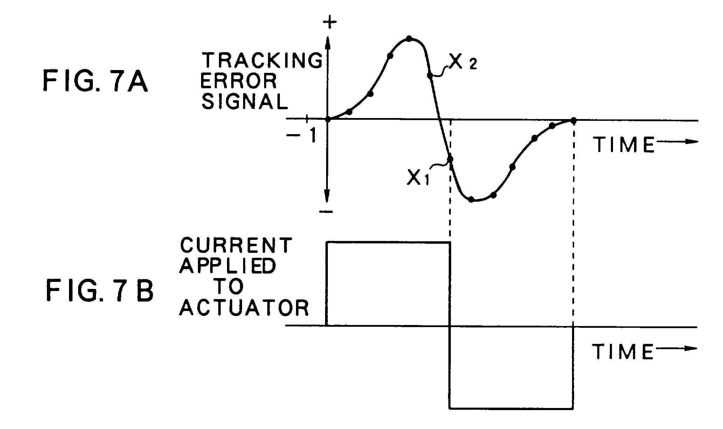

A time t = -1 shown in a step 1 indicates a time prior to the detection of the tracking error signal. As shown in Fig. 7A, a jumping pulse is not produced at t = -1. In steps 2 and 3, next samplings are effected and the tracking error signal X₂ reaches zero as shown in Fig. 7A. As a result, in a step 4, the DSP 13 issues a command signal to the tracking actuator 8 through the I/O controller 11 and the D/A converter 7 to apply the jumping pulse. The tracking actuator 8 functions to drive the optical system 2 across the track and comprises an actuator and a driver therefor. Thus, in response to the command signal, the driver supplies a predetermined signal (jumping signal) as shown in Fig. 7B to the actuator so that the jumping of the optical system 2 is started.

In a step 5, the DSP 13 stores the tracking error signal which has been sampled at the previous time, into the memory 12. The storing into the memory 12 is effected at each sampling so that the tracking error signal at the previous sampling is always maintained in the memory 12. In a step 6, the next sampling is effected and the resulting tracking error signal X₁ is read into the DSP 13. In a step 7, the DSP 13 processes the error signal X₁ of the current sampling and the error signal X₂ of the previous sampling stored in the memory 12. Specifically, the previous error signal X₂ and the current error signal X₁ are multiplied to determine if the product meets X₁ x X₂ ≦ 0. If the product is zero or negative, it indicates that the zero-crossing point of the AT error signal is between the previous sampling time and the current sampling time. For each sampling, the steps 3 to 7 are repeated, and when the current sampling time exceeds the zero-crossing point as shown in Fig. 7A, the product at the DSP 13 is zero or negative and meets the condition of X₁ x X₂ ≦ 0.

Thus, in a step 8, the DSP 13 determines that the error signal has passed the zero-crossing point and commands to the tracking actuator 8 to apply a reverse pulse signal (braking signal). Since the sampling time thereof is closest to the zero-crossing point, that timing is selected as the current direction switching timing for the tracking actuator 8. As a result, as shown in Fig. 7B, the reverse pulse current is applied to the tracking actuator 8 at the sampling time which meets the condition of the step 7.

In steps 9 to 11, the operation is same as that in steps 5 to 7. The error signal at the previous sampling is stored in the memory 12 and it is multiplied with the error signal of the current sampling to determine if the product meets the condition of X₁ x X₂ ≦ 0. If the condition is met in the step 11, it means that the tracking error signal again crossed the zero line, and the application of the reverse pulse current is stopped and the jump operation is terminated. Before the termination, in actual, the number of times t of sampling at the time of application of the positive-going pulse is decremented by one in a step 12, and the difference is checked to determine if it meets a condition of t ≦ 0 in a step 13. The steps 8 to 13 are repeated until the above condition is met. When the same number of times of sampling as the number of times of sampling under the application of the positive-going pulse is effected, the application time of the reverse pulse to the tracking actuator 8 amounts to the application time of the positive-going pulse. At the time point, the application of the reverse pulse is stopped. Accordingly, if the respective conditions are met in the steps 11 to 13, the DSP 13 commands to the tracking actuator 8 to stop the application of the reverse pulse so that the application of the reverse pulse is terminated as shown in Fig. 7B.

In Fig. 7A, the sampling points are shown by dots on the tracking error signal. For a purpose of simplification of explanation, the number of times of sampling is of small number. In actuallity, the number of times of sampling is greater and an error of the tracking error signal at the zero-crossing point is minor so that exact detection is attained.

In the present embodiment, the DSP 13 multiplies the error signal of the previous sampling with the error signal of the current sampling and determines the current direction switching timing of the actuator based on the product. Alternatively, those error signals may be added. In this case, if a sum is zero or negative, it means that the zero-crossing point of the AT error signal is between the sampling time points. Accordingly, the current direction of the actuator may be switched when the sum is zero or negative.

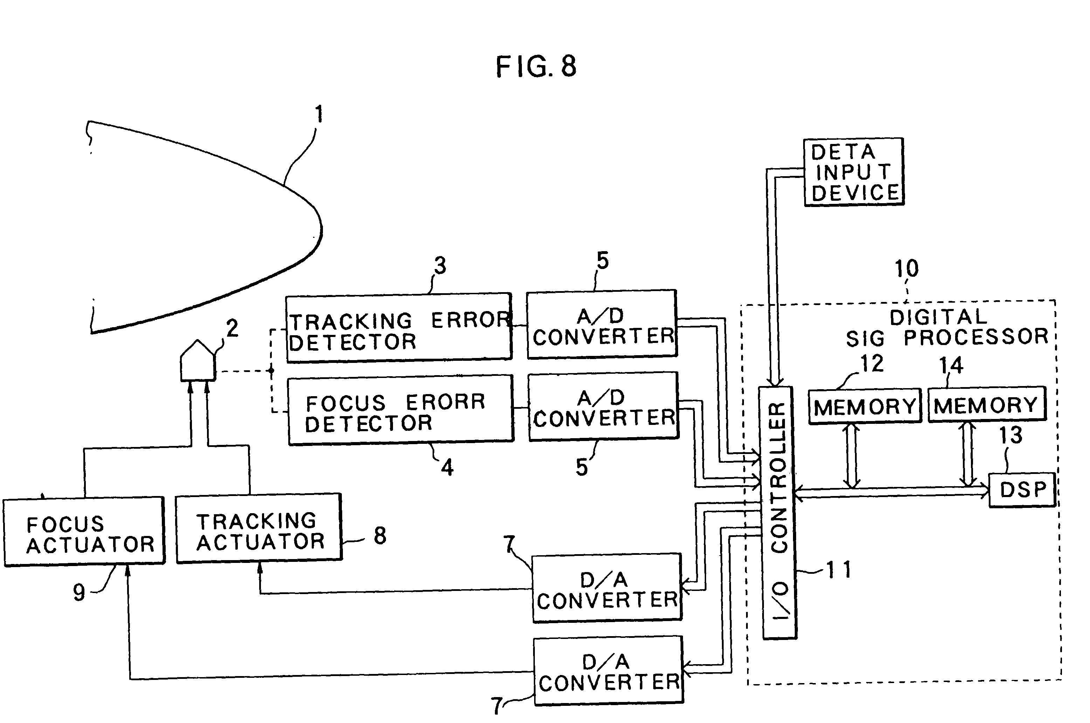

Fig. 8 shows a block diagram of another embodiment of the information recording and/or reproducing apparatus of the present invention. In Fig. 8, the like elements to those shown in Fig. 5 are designated by the like numerals and the detailed explanation thereof is omitted.

The apparatus of Fig. 8 differs from the apparatus of Fig. 5 in that data such as control parameters are inputted to the I/O controller 11 from a data input device 15. The digital signal processor 10 in the present embodiment has another memory 14 in addition to the memory 12.

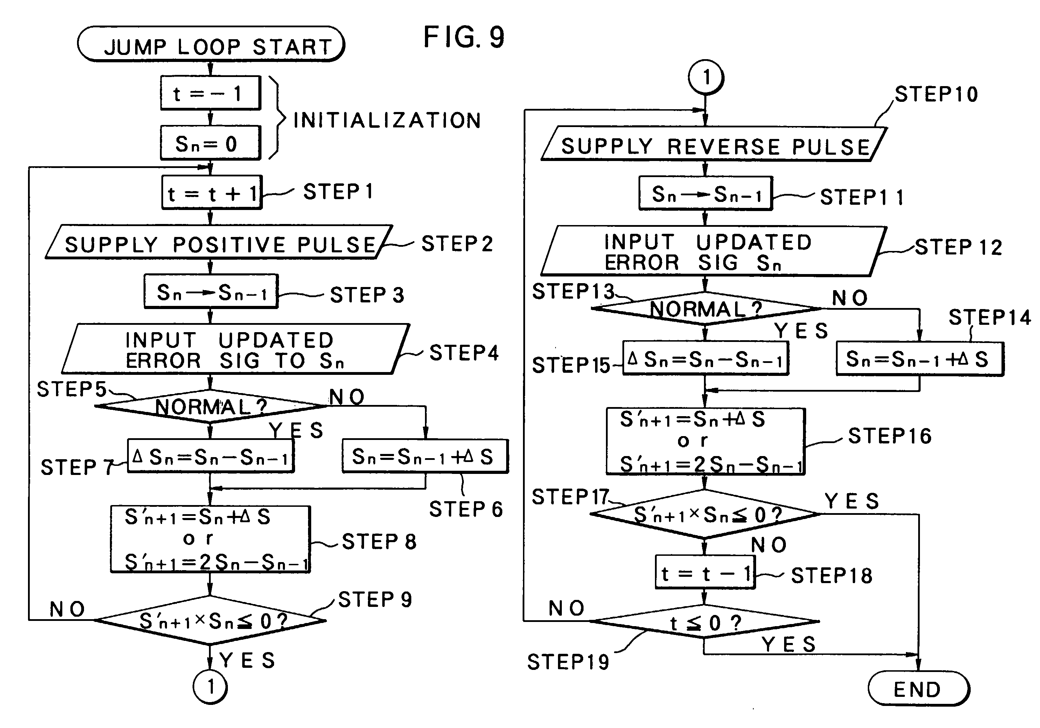

The jump operation in the apparatus of Fig. 8 is explained with reference to a flow chart of Fig. 9.

In Fig. 9, when one-track forward jump is set, a jump counter variable t is set to -1 and a tracking error signal variable Sₙ is set to zero. After the initialization, one is added to the jump counter variable t in a step 1, and a predetermined jumping pulse is applied to the tracking actuator 8 in a step 2. The DSP 13 issues a control signal through the I/O controller 11 and it is converted to an analog signal by the D/A converter 7. Thus, a jumping pulse is supplied to the tracking actuator.

In a step 3, the error signal Sₙ is transferred to the previous error signal variable Sₙ₋₁. In a step 4, the latest error signal is set to the error signal variable Sₙ. Namely, the previous error signal is stored into Sₙ₋₁ and the error signal Sₙ of the current sampling is stored into Sₙ. The memory 12 is used to store Sₙ₋₁ and the memory 14 is used to store Sₙ. In a step 5, the DSP 13 determines whether the error signal is normal or not, and if it is in error due to a defect in a recording medium, or damage or dust, the process proceeds to a step 6. In the step 6, a difference ΔS = Sₙ₋₁ - Sₙ₋₂ between the second preceding data Sₙ₋₂ and the first preceding data Sₙ₋₁ is added to the first preceding data Sₙ₋₁ stored in the memory 12 to determine the error signal Sₙ.

On the other hand, if the signal is determined normal in the step 5, a difference AS from the first preceding error signal Sₙ₋₁ is determined in a step 7, and the resulting ΔS and Sₙ are temporarily stored into the memory 12. In a step 8, the error signal S'ₙ₊₁ at the next sampling point is estimated. The estimated error signal S'ₙ₊₁ is determined by the operation of S'ₙ₊₁ = Sₙ + ΔS faced on ΔS and Sₙ previously stored in the memory 12. Alternatively, it may be determined by S'ₙ₊₁ = 2Sₙ - Sₙ₋₁ based on the current error signal Sₙ and the previous error signal Sₙ₋₁. In a step 9, the resulting estimated signal S'ₙ₊₁ is multiplied with the current error signal Sₙ to determine whether the product is zero or negative. Namely, at each sampling, the estimated error signal at the next sampling is determined, and the resulting estimated error signal is multiplied with the current error signal to determine whether the product is zero or negative.

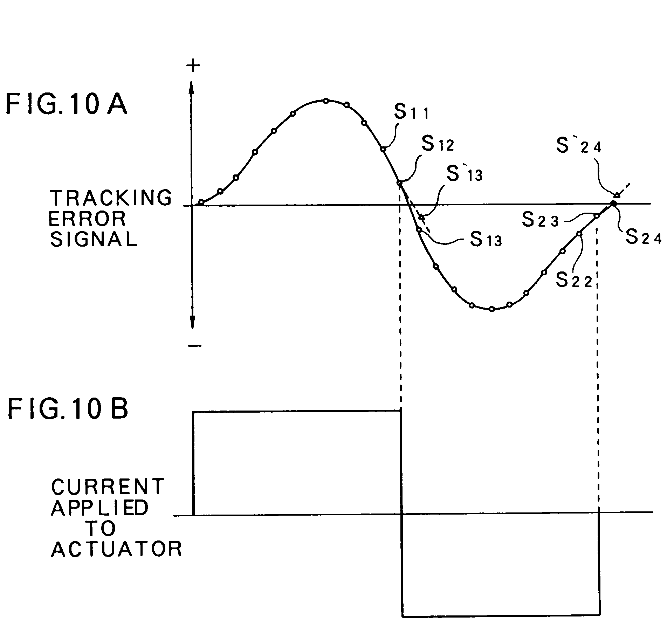

Figs. 10A and 10B show the tracking error signal and the actuator current, respectively. S₁₂ and S₁₃ in Fig. 10A show tracking error signals at the respective sampling times. It is assumed that the current error signal is S₁₂ and the estimated error signal is S₁₃'. The product of S₁₂ and S₁₃' is negative because those error signals are on the positive and negative sides. The steps 1 to 9 are carried out for each sampling, and the product is determined to be negative for the first time in the step 9 at the sampling time of S₁₂.

If the decision in the step 9 is zero or negative, it means that the error signal will be negative at the next sampling time and the error signal is very close to the zero-crossing point. Accordingly, this time point is selected as the current direction switching timing for the actuator current, and the reverse pulse is applied to the actuator in the step 10. Thus, a negative current (braking signal) is applied to the actuator at the sampling point of S₁₂ as shown in Fig. 10B.

After a step S₁₁, the same process as that of the steps 1 to 9 is carried out to detect the next zero-crossing point of the tracking error signal. In the step 11, the error signal Sₙ is transferred to the previous error signal variable Sₙ₋₁. In a step 12, a latest error signal is set into the error signal variable Sₙ. In a step 13, whether the error signal is normal or not is determined, and if it is in error, the operation of Sₙ₋₁ + ΔS is carried out in a step 14 to produce Sₙ. If the error signal is normal, a difference ΔS between the previous error signal and the current error signal is determined in a step 15.

In a step 16, an estimated error signal at the next sampling is determined based on Sₙ and ΔS in the same manner as that described above. Again, alternatively, the estimation may be made based on the previous error signal Sₙ₋₁ and the current error signal Sₙ. In a step 17, the current error signal S is multiplied with the estimated error signal S'ₙ₊₁ to determine whether the product is zero or negative. If the product is positive, the jump counter variable t is decremented by one in a step 18, and whether the counter variable t is zero or not is determined in a step 19. The jump counter vairable t holds the number of times of sampling under the application of the positive-going jump pulse. It is decremented by one at each sampling and the process returns to the step 10. Accordingly, the steps 10 to 19 are repeated until the product is determined to be zero or negative in the step 17.

In Fig. 10A, S₂₂ to S₂₄ are tracking error signals at the respective sampling times, and S'₂₄ is an estimated error signal at the S₂₃ sampling time. In Fig. 10, the product of S₂₃ x S₂₄' is negative when S₂₃ is sampled. Thus, the actuator current is stopped at the S₂₃ sampling time. Namely, when S₂₃ is sampled in the step 17, the product of S₂₃ and S'₂₄ is negative and it is determined that the error signal is very close to the zero-crossing point. Accordingly, as shown in Fig. 10B, the actuator current is stopped at the S₂₃ sampling point and the jump operation is terminated.

In a step 18, one is decremented from the jump counter variable t at each sampling, and if the variable t reaches zero, the application of the jump pulse is terminated in a step 19. Since the jump counter variable t holds the number of times of sampling under the application of the positive-going jump pulse, the time when the variable t reaches zero is the time at which the negative jump pulse application time is equal to the positive jump pulse application time. Accordingly, the actuator current is stopped when the jump counter variable t reaches zero.

Again, in the present embodiment, the multiplication in the steps 9 and 17 may be substituted by the addition so that the polarity of the current applied to the actuator is switched and the application of the current is stopped when the sum is zero or negative.

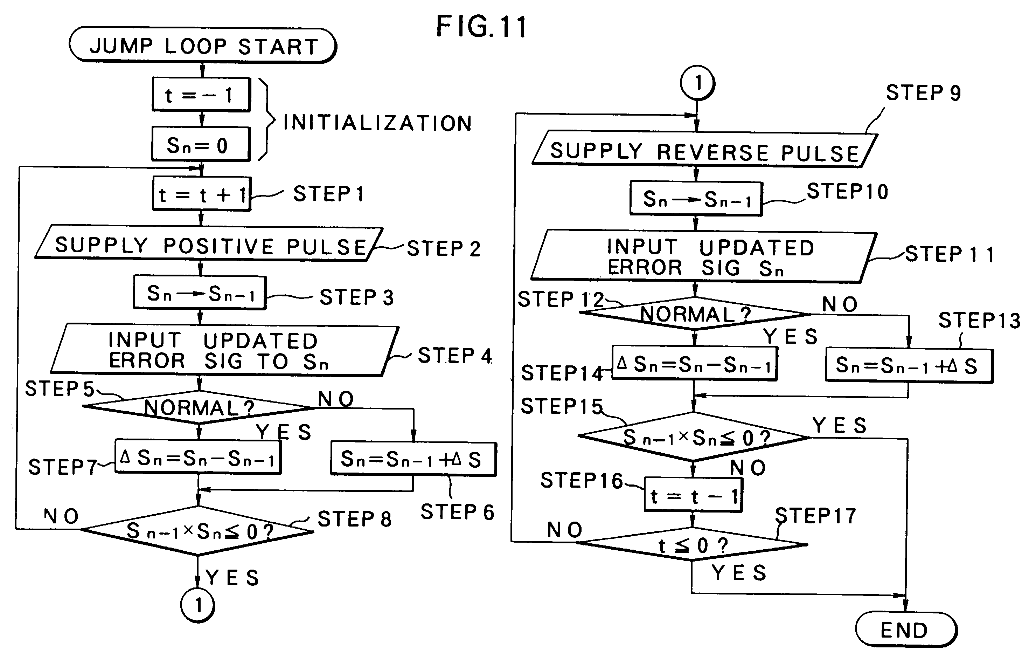

In the method shown in Fig. 9, the timing to switch the polarity of the current applied to the actuator is detected by processing the currently sampled error signal and the estimated error signal to be next sampled. Alternatively, the timing may be detected by a configuration shown in Fig. 8 in the same manner as that described in connection with Fig. 6. A flow chart of such an operation is shown in Fig. 11.

In Fig. 11, steps 1 to 7 are same as the steps 1 to 7 of Fig. 9 and the explanation thereof is omitted. In the present embodiment, the currently sampled error signal Sₙ and the previous error signal Sₙ₋₁ stored in the memory 12 are multiplied in a step 8. If the product is zero or negative, the process proceeds to a step 9 to apply the reverse pulse (braking pulse) to the actuator.

In the present embodiment, the steps 10 to 14 and the steps 16 and 17 are same as the steps 11 to 15 and the steps 18 and 19 in Fig. 9, respectively, and the explanation thereof is omitted. In the present embodiment, the currently sampled error signal Sₙ and the previous error signal Sₙ₋₁ stored in the memory 12 are multiplied in the step 15, and if the product is zero or negative, the application of the current to the actuator is stopped and the jump operation is terminated.

In the second embodiment, the polarity of the current applied is reversed when the error signal S₁₂ is sampled as shown in Figs. 10A and 10B. Alternatively, a time from the S₁₂ sampling time to the zero-crossing may be estimated based on S₁₂ and S'₁₃, and the polarity of the applied current may be switched at a timing delayed by the estimated time from the S₁₂ sampling time. In the above description, the optical disk is used as the medium, but the present invention is applicable to information recording and/or reproducing apparatus which uses a medium having a plurality of tracks parallelly arranged such as magnetic disk or optical card.

## Claims

1. An information recording/reproducing apparatus for effecting recording of information and/or reproduction of information by irradiating a recording medium (1) having a plurality of tracks, parallely arranged thereon, with a light beam, said apparatus comprising:
an optical system (2) for irradiating one of the tracks with the light beam;
an actuator (8,9) for moving said optical system (2) relative to the recording medium (1);
a drive circuit (13) for applying a drive current to said actuator to drive said actuator (8,9);
a circuit (3,4) for generating a tracking error signal from reflected light produced when one of the tracks is irradiated with the light beam;
a tracking error signal detector for intermittently sampling the error signal a plurality of times to produce a plurality of sampled tracking error signals varying with the relative movement of said optical system, wherein the tracking error signal periodically varies between a positive value and a negative value with respect to a zero level;
a memory (12) for storing the sampled tracking error signals;
said apparatus being characterised in further comprising:
a control circuit (10) for multiplying or adding two of the plurality of sampled tracking error signals, one of which is stored in said memory (12), and the other of which is a current instantaneous sampled value of the tracking error signal produced after the sampled tracking error signal stored in said memory (12), and for causing said drive circuit (13) to vary the driving current applied to said actuator (8,9) when the result of the multiplying is zero or negative, or when the result of the adding is zero or negative (13).

2. An apparatus according to claim 1 further comprising means (13) for estimating the latest sampled value from a sampled value of the most recent prior detection and a sampled value of the two most recent prior detection, which are stored in said memory, when the current instantaneous sampled value of the tracking error signal has an abnormality.

3. An information recording/reproducing apparatus for effecting recording of information and/or reproduction of information by irradiating a recording medium (1) having a plurality of tracks, parallely arranged thereon, with a light beam, said apparatus comprising:
an optical system (2) for irradiating one of the tracks with the light beam;
an actuator (8,9) for moving said optical system relative to the recording medium (1);
a drive circuit (13) for applying a drive current to said actuator (8,9) to drive said actuator (8,9);
a circuit (3,4) for generating a tracking error signal from reflected light produced when one of the tracks is irradiated with the light beam;
a tracking error signal detector (5) for intermittently sampling the tracking error signal a plurality of times to produce a plurality of sampled error signals varying with the relative movement of said optical system, wherein a tracking error signal periodically varies between a positive value and a negative value with respect to a zero level of the tracking error signal;
a memory (12) for storing the sampled tracking error signals;
said apparatus being characterised in further comprising :
a control circuit (10 or 11) for estimating the tracking error signal at the next sampling point, based on a current instantaneous sampled value of an error signal and a previously sampled tracking error signal stored in said memory, for multiplying or adding the estimated tracking error signal and the current instantaneous sampled value of the tracking error signal and for causing said drive circuit (13) to vary the driving current applied to said actuator (8,9) when the result of the multiplying is zero or negative, or when the result of the adding is zero or negative.

4. An apparatus according to claim 3 further comprising means (13) for estimating the latest sampled value from a sampled value of the most recent prior detection and a sampled value of the two most recent prior detection, which are stored in said memory (12), when the current instantaneous sampled value of the tracking error signal has an abnormality.

5. An information recording and/or reproducing method for recording and/or reproduction of information on a recording medium (1) having a plurality of tracks, parallely arranged thereon the method comprising the steps of:
irradiating one of the tracks with a light beam using an optical system;
moving the optical system relative to the recording medium (1) using an actuator (8,9);
applying a drive current to the actuator (8,9) to drive the actuator;
generating a tracking error signal indicating an irradiation state of the light beam from reflected light produced when one of the tracks is irradiated with the light beam;
intermittently sampling the tracking error signal a plurality of times to produce the plurality of sampled tracking error signals varying with the movement of the optical system, wherein the error signal periodically varies between a positive value and a negative value with respect to a zero level;
storing the sampled tracking error signals;
said method being characterised in further comprising the steps of:
multiplying or adding two of the plurality of sampled tracking error signals, one of which is stored in the memory, and the other of which is a current instantaneous sampled value of the tracking error signal produced after the sampled error signal stored in the memory, and varying the drive current applied to the actuator when the result of the multiplication or addition is zero or negative.

6. A method according to claim 5 further including the step of estimating the latest sampled value from a sampled value of the most recent prior detection and a sampled value of the two most recent prior detection when the current instantaneous sampled value of the tracking error signal has an abnormality.

7. An information recording and/or reproducing method for recording and/or reproduction of information on a recording medium having a plurality of tracks, parallely arranged thereon said method comprising the steps of:
irradiating one of the tracks with a light beam using an optical system;
moving the optical system relative to the recording medium (1);
applying a drive current to an actuator in order to move said optical system;
generating a tracking error signal indicating an irradiation state of the light beam from reflected light produced when one of the tracks is irradiated with the light beam;
intermittently sampling the tracking error signal a plurality of times to produce a plurality of sampled tracking error signals varying with the movement of said optical system, wherein the tracking error signal periodically varies between a positive value and a negative value with respect to a zero level of the tracking error signal;
storing the sampled tracking error signals;
said method being characterised and including the further steps of :
estimating an error signal not yet sampled based on a current instantaneous sampled value of a tracking error signal and a previously sampled stored tracking error signal;
multiplying or adding the estimated tracking error signal and current instantaneous sampled value of the tracking error signal; and
varying the driving current applied to the actuator when the multiplying or addition is zero or negative.

8. A method according to claim 7 further comprising the step of estimating the latest sampled value from a sampled value of the most recent detection, and a sampled value of the stored most recent prior detection when the current instantaneous sampled value of the tracking error signal has an abnormality.

## Patentansprüche

1. Informationsaufzeichnungs/Wiedergabegerät zur Bewirkung der Informationsaufzeichnung und/oder der Informationswiedergabe durch Bestrahlung eines Aufzeichnungsträgers (1) mit einer Vielzahl von parallel auf diesem angeordneten Spuren, mit einem Lichtstrahl, mit:
einem optischen System (2) zur Bestrahlung einer der Spuren mit dem Lichtstrahl;
einem Stellglied (8, 9) zur Bewegung des optischen Systems (2) relativ zum Aufzeichnungsträger (1);
einer Treiberschaltung (13), die einen Antriebsstrom an das Stellglied (8, 9) zu dessen Antrieb liefert;
einer Schaltung (3, 4) zur Erzeugung eines Spurfehlersignals aus dem reflektierten Licht, das beim Bestrahlen einer der Spuren mit dem Lichtstrahl erzeugt wird;
einem Spurfehlersignaldetektor zur intermittierenden Vielfach- Abtastung des Fehlersignals, um eine Vielzahl von Abtast- Spurfehlersignalen zu erzeugen, die sich mit der relativen Bewegung des optischen Systems verändern, wobei das Spurfehlersignal periodisch zwischen einem positiven und einem negativen Wert in Bezug auf einen Null- Pegel variiert;
einem Speicher (12) zur Speicherung der Abtast-Spurfehlersignale;
**dadurch gekennzeichnet,** daß des weiteren
eine Steuerschaltung (10) vorgesehen ist, die zwei der Vielzahl der Abtast- Spurfehlersignale multipliziert oder addiert, von denen eines in dem Speicher (12) gespeichert ist, und das andere ein unmittelbar abgetasteter Stromwert des Spurfehlersignals ist, der nach dem in dem Speicher (12) gespeicherten Abtast- Spurfehlersignal erzeugt wird, und die die Treiberschaltung (13) veranlaßt, den an das Stellglied (8, 9) angelegen Antriebsstrom zu verändern, wenn das Ergebnis entweder der Multiplikation oder der Addition Null oder negativ ist.

2. Gerät nach Anspruch 1, das des weiteren Mittel (13) vorgesehen sind zur Abschätzung des letzten Abtastwertes aus einem Abtastwert der allerletzten Feststellung und einem Abtastwert der vorletzten Feststellung, die in dem Speicher gespeichert sind, wenn der unmittelbar abgetastete Stromwert des Spurfehlersignals eine Anomalität aufweist.

3. Informationsaufzeichnungs/Wiedergabegerät zur Bewirkung der Informationsaufzeichnung und/oder der Informationswiedergabe durch Bestrahlung eines Aufzeichnungsträgers (1) mit einer Vielzahl von parallel auf diesem angeordneten Spuren, mit einem Lichtstrahl, mit:
einem optischen System (2) zur Bestrahlung einer der Spuren mit dem Lichtstrahl;
einem Stellglied (8, 9) zur Bewegung des optischen Systems (2) relativ zum Aufzeichnungsträger (1);
einer Treiberschaltung (13), die einen Antriebsstrom an das Stellglied (8, 9) zu dessen Antrieb liefert;
einer Schaltung (3, 4) zur Erzeugung eines Spurfehlersignals aus dem reflektierten Licht, das beim Bestrahlen einer der Spuren mit dem Lichtstrahl erzeugt wird;
einem Spurfehlersignaldetektor (5) zur intermittierenden Vielfach- Abtastung des Fehlersignals, um eine Vielzahl von Abtast- Spurfehlersignalen zu erzeugen, die sich mit der relativen Bewegung des optischen Systems verändern, wobei das Spurfehlersignal periodisch zwischen einem positiven und einem negativen Wert in Bezug auf einen Null- Pegel variiert;
einem Speicher (12) zur Speicherung der Abtast-Spurfehlersignale;
**dadurch gekennzeichnet,** daß des weiteren
eine Steuerschaltung (10 oder 11) vorgesehen ist, die das Spurfehlersignal am nächsten Abtastpunkt auf der Grundlage eines unmittelbar abgetasteten Stromwertes eines Fehlersignals und eines vorher abgetasteten, im Speicher gespeicherten Spurfehlersignals abschätzt, die ein geschätztes Spurfehlersignal mit dem unmittelbar abgetasteten Stromwert des Spurfehlersignals multipliziert oder addiert und die die Treiberschaltung (13) veranlaßt, den Antriebsstrom für das Stellglied (8, 9) zu ändern, wenn das Ergebnis entweder der Multiplikation oder der Addition Null oder negativ ist.

4. Gerät nach Anspruch 3, das des weiteren ausgestattet ist mit Mitteln (13) zur Abschätzung des letzten Abtastwertes aus einem Abtastwert der allerletzten Feststellung und eines Abtastwertes der vorletzten Feststellung, welche in dem Speicher (12) gespeichert sind, wenn der unmittelbar abgetastete Stromwert des Spurfehlersignals eine Anomalität aufweist.

5. Informationsaufzeichnungs- und/oder Wiedergabeverfahren zur Aufzeichnung und/oder Wiedergabe von Informationen mit einem Aufzeichnungsträger (1) mit einer Vielzahl von auf diesem parallel angeordneten Spuren, mit den Verfahrensschritten:
Bestrahlen einer der Spuren mit einem Lichtstrahl unter Verwendung eines optischen Systems;
Bewegen des optischen Systems relativ zum Aufzeichnungsträger (1) unter Verwendung eines Stellgliedes (8, 9);
Anlegen eines Antriebsstromes an das Stellglied (8, 9) zum Antrieb des Stellgliedes;
Erzeugen eines Spurfehlersignals, das einen Bestrahlungszustand des Lichtstrahls des reflektierten Lichts anzeigt, das erzeugt wird, wenn eine der Spuren mit dem Lichtstrahl bestrahlt wird;
intermittierendes Vielfach- Abtasten des Spurfehlersignals zur Erzeugung der Vielzahl von Spurfehler- Abtastsignalen, die mit der Bewegung des optischen Systems variieren, wobei das Fehlersignal periodisch zwischen einem positiven und einem negativen Wert in Bezug auf einen Null- Pegel schwankt;
Speichern der Spurfehlersignale;
**gekennzeichnet durch** die Verfahrensschritte: Multiplizieren oder Addieren zweier aus der Vielzahl von Spurfehler- Abtastsignalen, von denen eines in dem Speicher gespeichert ist und das andere, welches ein unmittelbar abgetasteter Stromwert des Spurfehlersignals ist, der nach dem in dem Speicher gespeicherten Abtast- Spurfehlersignal erzeugt wird, und Verändern des an das Stellglied angelegten Antriebsstrom, wenn das Ergebnis entweder der Multiplikation oder der Addition Null oder negativ ist.

6. Verfahren nach Anspruch 5, das des weiteren den Schritt des Abschätzens des letzten Abtastwertes aus einem abgetasteten Wert der allerletzten Feststellung und eines Abtastwertes der vorletzten Feststellung ist, wenn der unmittelbar abgetastete Stromwert des Spurfehlerssignals eine Anomalität aufweist.

7. Informationsaufzeichnungs- und/oder Wiedergabeverfahren zur Aufzeichnung und/oder Wiedergabe von Informationen mit einem Aufzeichnungsträger (1) mit einer Vielzahl von auf diesem parallel angeordneten Spuren, mit den Verfahrensschritten:
Bestrahlen einer der Spuren mit einem Lichtstrahl unter Verwendung eines optischen Systems;
Bewegen des optischen Systems relativ zum Aufzeichnungsträger (1) unter Verwendung eines Stellgliedes (8, 9);
Anlegen eines Antriebsstromes an das Stellglied (8, 9) zum Antrieb des Stellgliedes;
Erzeugen eines Spurfehlersignals, das einen Bestrahlungszustand des Lichtstrahls des reflektierten Lichts anzeigt, das erzeugt wird, wenn eine der Spuren mit dem Lichtstrahl bestrahlt wird;
intermittierendes Vielfach- Abtasten des Spurfehlersignals zur Erzeugung der Vielzahl von Spurfehler- Abtastsignalen, die mit der Bewegung des optischen Systems variieren, wobei das Fehlersignal periodisch zwischen einem positiven und einem negativen Wert in Bezug auf einen Null- Pegel schwankt;
Speichern der Spurfehlersignale;
**gekennzeichnet durch** die Verfahrensschritte: Abschätzen eines noch nicht abgetasteten Fehlersignals auf der Grundlage eines unmittelbar abgetasteten Stromwertes des Spurfehlersignals und eines zuvor abgetasteten gespeicherten Spurfehlersignals;
Multiplizieren oder Addieren des geschätzten Spurfehlersignals mit dem unmittelbar abgetasteten Stromwert des Spurfehlersignals; und
Variieren des Antriebsstromes für das Stellglied, wenn die Multiplikation oder die Addition Null oder negativ ist.

8. Verfahren nach Anspruch 7, mit dem weiteren Verfahrensschritt der Abschätzung des letzten Abtastwertes aus einem Abtastwert der allerletzten Feststellung und einem abgetasteten Wert der gespeicherten allerletzten Feststellung, wenn der unmittelbar abgetastete Stromwert des Spurfehlersignals eine Anomalität aufweist.

## Revendications

1. Appareil d'enregistrement/reproduction d'information pour effectuer l'enregistrement d'une information et/ou la reproduction d'une information en irradiant un support d'enregistrement (1) comportant une pluralité de pistes, disposées sur celui-ci parallèlement, avec un faisceau lumineux, ledit appareil comprenant:
un système optique (2) pour irradier l'une des pistes avec le faisceau lumineux;
un dispositif d'actionnement (8, 9) pour déplacer ledit système optique (2) par rapport au support d'enregistrement (1);
un circuit d'attaque (13) pour appliquer un courant d'attaque audit dispositif d'actionnement pour entraîner ledit dispositif d'actionnement (8, 9);
un circuit (3, 4) pour générer un signal d'erreur de suivi de piste à partir de la lumière réfléchie produite lorsque l'une des pistes est irradiée par le faisceau lumineux;
un détecteur de signal d'erreur de suivi de piste pour échantillonner de manière intermittente le signal d'erreur une pluralité de fois afin de produire une pluralité de signaux d'erreur de suivi de piste échantillonnés variant avec le déplacement relatif dudit système optique, le signal d'erreur variant périodiquement entre une valeur positive et une valeur négative par rapport à un niveau zéro;
une mémoire (12) pour stocker les signaux d'erreur de suivi de piste échantillonnés;
ledit appareil étant caractérisé en ce qu'il comprend en outre:
un circuit de commande (10) pour multiplier ou additionner deux de la pluralité de signaux d'erreur de suivi de piste échantillonnés, l'un d'eux étant stocké dans ladite mémoire (12), et l'autre étant une valeur en cours échantillonnée instantanée du signal d'erreur de suivi de piste produit après le signal d'erreur de suivi de piste échantillonné stocké dans ladite mémoire (12), et pour conduire ledit circuit d'attaque (13) à faire varier le courant d'attaque audit dispositif d'actionnement (8, 9) lorsque le résultat de la multiplication est zéro ou négatif, ou lorsque le résultat de l'addition est zéro ou négatif (13).

2. Appareil selon la revendication 1, comprenant en outre un moyen (13) pour estimer la dernière valeur échantillonnée à partir d'une valeur échantillonnée de la détection antérieure la plus récente et d'une valeur échantillonnée des deux détections antérieures les plus récentes, qui sont stockées dans ladite mémoire, lorsque la valeur en cours échantillonnée instantanée du signal d'erreur de suivi de piste présente une anomalie.

3. Appareil d'enregistrement/reproduction d'information pour effectuer l'enregistrement d'une information et/ou la reproduction d'une information en irradiant un support d'enregistrement (1) comportant une pluralité de pistes disposées sur celui-ci parallèlement, avec un faisceau lumineux, ledit appareil comprenant:
un système optique (2) pour irradier l'une des pistes avec le faisceau lumineux;
un dispositif d'actionnement (8, 9) pour déplacer ledit système optique par rapport au support d'enregistrement (1) ;
un circuit d'attaque (13) pour appliquer un courant d'attaque audit dispositif d'actionnement (8, 9) pour entraîner ledit dispositif d'actionnement (8, 9);
un circuit (3, 4) pour générer un signal d'erreur de suivi de piste à partir de la lumière réfléchie produite lorsque l'une des pistes est irradiée par le faisceau lumineux;
un détecteur (5) de signal d'erreur de suivi de piste pour échantillonner de manière intermittente le signal d'erreur de suivi de piste une pluralité de fois afin de produire une pluralité de signaux d'erreur échantillonnés variant avec le déplacement relatif dudit système optique, le signal d'erreur de suivi de piste variant périodiquement entre une valeur positive et une valeur négative par rapport à un niveau zéro du signal d'erreur de suivi de piste;
une mémoire (12) pour stocker les signaux d'erreur de suivi de piste échantillonnés;
ledit appareil étant caractérisé en ce qu'il comprend en outre:
un circuit de commande (10 ou 11) pour estimer le signal d'erreur de suivi de piste au point d'échantillonnage suivant, sur la base d'une valeur en cours échantillonnée instantanée d'un signal d'erreur et d'un signal d'erreur de suivi de piste échantillonné précédemment, stocké dans ladite mémoire, pour multiplier ou additionner le signal d'erreur de suivi de piste estimé et la valeur échantillonnée instantanée en cours du signal d'erreur de suivi de piste et pour conduire ledit circuit d'attaque (13) à faire varier le courant d'attaque appliqué audit dispositif d'actionnement (8, 9) lorsque le résultat de la multiplication est zéro ou négatif, ou lorsque le résultat de l'addition est zéro ou négatif.

4. Appareil selon la revendication 3, comprenant en outre un moyen (13) pour estimer la dernière valeur échantillonnée à partir d'une valeur échantillonnée de la détection précédente la plus récente et d'une valeur échantillonnée des deux détections précédentes les plus récentes, qui sont stockées dans ladite mémoire (12), lorsque la valeur échantillonnée instantanée en cours du signal d'erreur de suivi de piste présente une anomalie.

5. Procédé d'enregistrement et/ou de reproduction d'information pour l'enregistrement et/ou la reproduction d'information sur un support d'enregistrement (1) comportant une pluralité de pistes disposées parallèlement sur celui-ci, le procédé comprenant les étapes suivantes:
irradiation de l'une des pistes avec un faisceau lumineux en utilisant un système optique;
déplacement du système optique par rapport au support d'enregistrement (1) en utilisant un dispositif d'actionnement (8, 9);
application d'un courant d'attaque au dispositif d'actionnement (8, 9) pour entraîner le dispositif d'actionnement;
génération d'un signal d'erreur de suivi de piste indiquant un état d'irradiation du faisceau lumineux à partir de la lumière réfléchie produite lorsque l'une des pistes est irradiée avec le faisceau lumineux;
échantillonnage de manière intermittente du signal d'erreur de suivi de piste une pluralité de fois pour produire la pluralité de signaux d'erreur de suivi de piste échantillonnés variant avec le déplacement du système optique, le signal d'erreur variant périodiquement entre une valeur positive et une valeur négative par rapport à un niveau zéro;
stockage des signaux d'erreur de suivi de piste échantillonnés;
ledit procédé étant caractérisé en ce qu'il comprend en outre les étapes de:
multiplication ou addition de deux de la pluralité de signaux d'erreur de suivi de piste échantillonnés, l'un d'eux étant stocké dans la mémoire, et l'autre étant une valeur échantillonnée instantanée en cours du signal d'erreur de suivi de piste produit après le signal d'erreur échantillonné stocké dans la mémoire, et variation du courant d'attaque appliqué au dispositif d'actionnement lorsque le résultat de la multiplication ou de l'addition est zéro ou négatif.

6. Procédé selon la revendication 5, comportant en outre l'étape d'estimation de la dernière valeur échantillonnée à partir d'une valeur échantillonnée de la détection précédente la plus récente et d'une valeur échantillonnée des deux détections précédentes les plus récentes lorsque la valeur échantillonnée instantanée en cours du signal d'erreur de suivi de piste présente une anomalie.

7. Procédé d'enregistrement et/ou de reproduction d'information pour l'enregistrement et/ou la reproduction d'information sur un support d'enregistrement comportant une pluralité de pistes disposées parallèlement sur celui-ci, ledit procédé comprenant les étapes de:
irradiation de l'une des pistes avec un faisceau lumineux en utilisant un système optique;
déplacement du système optique par rapport au support d'enregistrement (1);
application d'un courant d'attaque à un dispositif d'actionnement afin de déplacer ledit système optique;
génération d'un signal d'erreur de suivi de piste indiquant un état d'irradiation du faisceau lumineux à partir de la lumière réfléchie produite lorsque l'une des pistes est irradiée avec le faisceau lumineux;
échantillonnage de manière intermittente du signal d'erreur de suivi de piste une pluralité de fois pour produire une pluralité de signaux d'erreur de suivi de piste échantillonnés variant avec le déplacement dudit système optique, dans lequel le signal d'erreur de suivi de piste varie périodiquement entre une valeur positive et une valeur négative par rapport à un niveau zéro du signal d'erreur de suivi de piste;
stockage des signaux d'erreur de suivi de piste échantillonnés;
ledit procédé étant caractérisé par, et comportant, les étapes supplémentaires suivantes:
estimation d'un signal d'erreur pas encore échantillonné sur la base d'une valeur échantillonnée instantanée en cours d'un signal d'erreur de suivi de piste et d'un signal d'erreur de suivi de piste stocké échantillonné précédemment;
multiplication ou addition du signal d'erreur de suivi de piste estimé et de la valeur échantillonnée instantanée en cours du signal d'erreur de suivi de piste; et
variation du courant d'attaque appliqué au dispositif d'actionnement lorsque la multiplication ou l'addition est zéro ou négative.

8. Procédé selon la revendication 7, comprenant en outre l'étape d'estimation de la dernière valeur échantillonnée à partir d'une valeur échantillonnée de la détection la plus récente, et d'une valeur échantillonnée de la détection stockée précédente la plus récente lorsque la valeur échantillonnée instantanée en cours du signal d'erreur de suivi de piste présente une anomalie.
